# EUROPEAN PATENT APPLICATION

(11) **EP 2 023 604 A2**
(43) Date of publication of application: **11.02.2009**
(21) Application number: 08013943.9
(22) Date of filing: 04.08.2008
(51) Int. Cl.: H04N 1/64

(54) **Image processing apparatus for reducing JPEG image capturing time and JPEG image capturing method perfomed by using same**

(30) Priority: 08.08.2007 KR 20070079703
(71) Applicant: Core Logic, Inc., Samseong-dong, Gangnam-gu Seoul 135-090 (KR)
(72) Inventor: Choi, Kyu-Bok, Seoul (KR)
(74) Representative: Grünecker, Kinkeldey, Stockmair & Schwanhäusser Anwaltssozietät

(57) **Abstract**

Provided are an image processing apparatus capable of reducing a joint photographic coding experts group (JPEG) image capturing time, and a method of reducing the JPEG image capturing time by using the image processing apparatus and a multimedia application processor (MAP) used in the image processing apparatus. image processing apparatus including: a back end unit receiving an instruction from a base band unit to capture a joint photographic coding experts group (JPEG) image, generating data used to generate an image by using a video buffer and a video controller, and transferring the data used to generate an image to the base band unit; the base band unit receiving the data used to generate the image from the back end unit and transferring the data to the display unit as display information; and the display unit receiving the display information from the base band unit and displaying the display information.

## Description

### CROSS-REFERENCE TO RELATED PATENT APPLICATION

This application claims the benefit of Korean Patent Application No. 10-2007-0079703, filed on August 8, 2007, in the Korean Intellectual Property Office, the disclosure of which is incorporated herein in its entirety by reference.

### 1. Field of the Invention

The present invention relates to an image processing apparatus and a control method used by the image processing apparatus, and particularly, to an image processing apparatus that captures a joint photographic coding experts group (JPEG) image in an embedded system used in a hand terminal, and a JPEG image capturing method performed by the image processing apparatus.

### 2. Description of the Related Art

Hand terminals such as mobile phones, personal digital assistant (PDAs), portable multimedia players (MPPs), etc. have recently become much smaller as electronic parts have become highly sensitive, miniaturized, and light-weight. Also, hand terminals provide various additional functions satisfying a user's desire and increasing user convenience, in addition to simple communication functions. For example, hand terminals have functions that allow users to listen to radio, view a TV program, and play MPEG-1 audio layer 3 (MP3) files. In particular, camera phones having a camera function are widely popular.

Camera phones can capture images via an embedded or detachable camera sensor. The number of pixels in the camera sensor has increased and the image quality has greatly improved.

In general, an image signal processor (ISP; hereinafter the "ISP" refers to ISP of a camera having a camera sensor) of the camera converts an image of a subject detected by the camera sensor into an image signal that can be converted to joint photographic coding experts group (JPEG) data; stores the image signal in a back end unit of a hand terminal; encodes the image signal to the JPEG data in response to an instruction to capture a JPEG image received from a mobile station modem (MSM) of a base band unit; and stores the JPEG data.

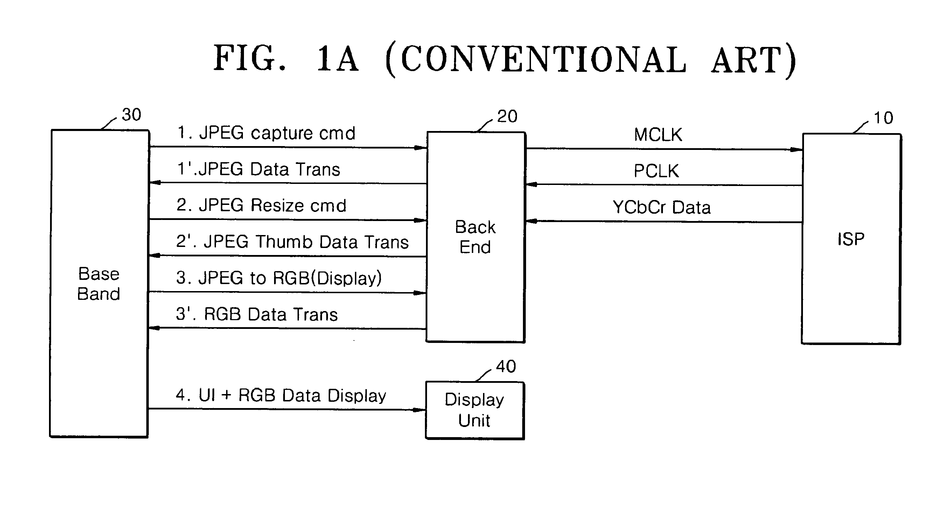

FIG. 1A is a data flow block diagram of a JPEG image capturing process performed by a conventional image processing apparatus. The conventional image processing apparatus is an image processing apparatus of a hand terminal that performs a multimedia function.

Referring to FIG. 1A, the conventional image processing apparatus comprises an ISP 10 that captures an image and converts the captured subject image into an image signal; a back end unit 20 having various application software including a codec and a buffer that receives and temporarily stores the image signal from the ISP 10; a base band unit 30 that processes various types of input/output data and modulates a signal; and a display unit 40 that displays processed data, in particular, image data.

The JPEG image capturing process performed by the conventional image processing apparatus comprises encoding the image signal received from the ISP 10 into JPEG data, RGB data and JPEG thumbnail data that are to be displayed, and reading the encoded data. The time required to complete the JPEG capturing process is referred to as a JPEG image capturing time.

The JPEG capturing process performed by the conventional image processing apparatus will now be described briefly. If the back end unit 20 receives luminance and chrominance signal YCbCr data_from the ISP 10, the MSM of the base band unit 30 sends an instruction to the back end unit 20 to capture a JPEG image. The back end unit 20 encodes the YCbCr data into JPEG data using a JPEG codec in response to the instruction to capture the JPEG image, and transfers the JPEG data to the MSM of the base band unit 30. The MSM of the base band unit 30 transfers an instruction to resize the JPEG data to the back end unit 20 in order to generate JPEG thumbnail data. The back end unit 20 generates the JPEG thumbnail data in response to the instruction to resize the JPEG data, and transfers the JPEG thumbnail data to the MSM of the base band unit 30. The MSM of the base band unit 30 transfers an instruction to generate RGB data to the back end unit 20 in order to display the JPEG data on the display unit 40. The back end unit 20 decodes the JPEG data, converts the JPEG data into the RGB data, and transfers the RGB data to the MSM of the base band unit 30. MCLK denotes a master clock signal. PCLK denotes a pixel clock signal.

The conventional image processing apparatus performs a complicated JPEG image capturing process, results in a lengthy JPEG capturing time.

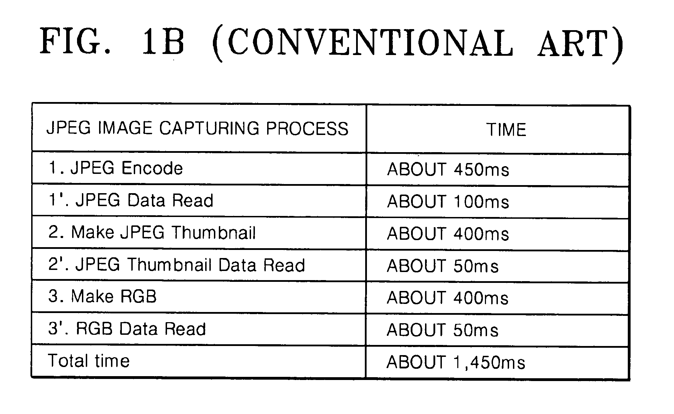

FIG. 1B is a table of JPEG image capturing time required to perform the JPEG image capturing process in the conventional image processing apparatus shown in FIG. 1A. JPEG image capturing process numbers included in the table correspond to numbers in arrows shown in FIG. 1A.

Referring to FIG. 1B, it takes about 550 ms for the conventional image process apparatus to encode the YCbCr data into the JPEG data and read the JPEG data. It takes about 450 ms to generate and read the JPEG thumbnail data. It takes about 450 ms to generate and read the RGB data. Therefore, it takes about 1,450 ms to completely perform the JPEG image capturing process, which is quite time-consuming.

### SUMMARY OF THE INVENTION

The present invention provides an image processing apparatus capable of reducing joint photographic coding experts group (JPEG) image capturing time, and a method of reducing the JPEG image capturing time by using the image processing apparatus and a multimedia application processor (MAP) used in the image processing apparatus.

According to an aspect of the present invention, there is provided an image processing apparatus comprising: a back end unit receiving an instruction from a base band unit to capture a joint photographic coding experts group (JPEG) image, generating data used to generate an image by using a video buffer and a video controller, and transferring the data used to generate an image to the base band unit; the base band unit receiving the data used to generate the image from the back end unit and transferring the data to the display unit as display information; and the display unit receiving the display information from the base band unit and displaying the display information.

The data used to generate the image may include the JPEG data, the JPEG thumbnail data, and the RGB data, wherein the display information is the RGB data or the JPEG thumbnail data, video buffer may store luminance and chrominance signal YCbCr data received from an image signal processor (ISP), and image data received from the ISP may be scaled by a preview scaler and be stored in the video buffer as the YCbCr data and be simultaneously stored in a compress data buffer of the back end unit as JPEG data that has been scaled with a bit map (BMP) scaler and encoded with a JPEG codec.

The YCbCr data stored in the video buffer may be converted into RGB data in response to the instruction to capture a JPEG image, and the YCbCr data stored in the video buffer may be divided into Y, Cb, and Cr signals in response to the instruction to capture a JPEG image, and be encoded as JPEG thumbnail data through the JPEG codec.

A JPEG image capturing time is referred to as time required by the base band unit to read the RGB data from the ISP starting when the YCbCr data is transferred. The YCbCr data stored in the video buffer makes it possible to reduce the JPEG image capturing time more than at least 15%, compared to an image processing apparatus that does not use a video buffer.

The image processing apparatus may be an embedded system of a hand terminal including a mobile communication terminal, a personal digital assistant (PDA), and a portable multimedia player (PMP).

According to another aspect of the present invention, there is provided a multimedia application processor (MAP) for transmitting/receiving data with an ISP and a base band processor, the MAP comprising: a video buffer storing luminance and chrominance signal YCbCr data received from the ISP; and a video controller controlling the input/output of the YCbCr data stored in the video buffer, wherein the video controller controls transmission of image generating data that is to be used to display information of the base band unit, to the base band unit in response to an instruction to capture a JPEG image, received from the base band unit by accessing the video buffer.

The image generating data may include JPEG data, JPEG thumbnail data, or RGB data, wherein the RGB data is generated by converting the YCbCr data stored in the video buffer, and wherein the JPEG thumbnail data is generated by dividing the YCbCr data stored in the video buffer into Y, Cb, and Cr data and encoding the Y, Cb, and Cr data through a JPEG codec.

The MAP may be an AP used in the back-end unit of a hand terminal including a mobile communication terminal, a PDA, and a PMP.

According to another aspect of the present invention, there is provided a JPEG image capturing method used by an image processing apparatus, the method comprising: receiving YCbCr data from an ISP; storing the YCbCr data in the video buffer of a back end unit; receiving an instruction to capture a JPEG image from a (mobile station modem) MSM and generating (encoding) data used to generate an image; and reading the data used to generate the image so as to display the data on a display unit.

The data used to generate the image may include JPEG data, JPEG thumbnail data, or RGB data, wherein the YCbCr data stored in the video buffer is image data received from the ISP that is scaled by a preview scaler, and the JPEG data is the image data received from the ISP that is scaled and compressed by a BMP scaler and a JPEG codec, and wherein the RGB data and the JPEG thumbnail data are generated using the YCbCr data stored in the video buffer.

The RGB data may be generated by converting the YCbCr data, wherein the JPEG thumbnail data is generated by dividing the YCbCr data into Y, Cb, and Cr data and encoding the Y, Cb, and Cr data through the JPEG codec. The YCbCr data stored in the video buffer is used to generate the RGB data and the JPEG thumbnail data, thereby reducing the JPEG image capturing time more than at least 15%, compared to a JPEG image capturing method that does not use a video buffer.

On the other hand, a signal for generating a user interface (UI) window may be transferred to the display unit when transferring the read RGB data.

### BRIEF DESCRIPTION OF THE DRAWINGS

The above and other features and advantages of the present invention will become more apparent by describing in detail exemplary embodiments thereof with reference to the attached drawings in which:

FIG. 1A is a data flow block diagram of a joint photographic coding experts group (JPEG) image capturing process performed by a conventional image processing apparatus;

FIG. 1B is a table of JPEG image capturing times required to perform the JPEG image capturing process in the conventional image processing apparatus shown in FIG. 1A;

FIG. 2A is a data flow block diagram of an image processing apparatus that reduces a JPEG image capturing time according to an embodiment of the present invention;

FIG. 2B is a table of JPEG image capturing time required to perform a JPEG image capturing process in the image processing apparatus shown in FIG. 2A;

FIG. 3 is a detailed block diagram of the image processing apparatus that stores YCbCr data in a video buffer and generates JPEG data shown in FIG. 2A according to an embodiment of the present invention;

FIG. 4 is a data flow block diagram of a method of generating RGB data by using a video buffer in the image processing apparatus shown in FIG. 2A according to an embodiment of the present invention;

FIG. 5 is a data flow block diagram of a method of generating JPEG thumbnail data in the image processing apparatus shown in FIG. 2A according to an embodiment of the present invention; and

FIG. 6 is a flowchart illustrating a method of capturing a JPEG image in an image processing apparatus according to an embodiment of the present invention.

### DETAILED DESCRIPTION OF THE INVENTION

The present invention will now be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will fully convey the concept of the invention to those of ordinary skill in the art. In the drawings, the thickness of layers and regions are exaggerated for clarity. Like reference numerals in the drawings denote like elements.

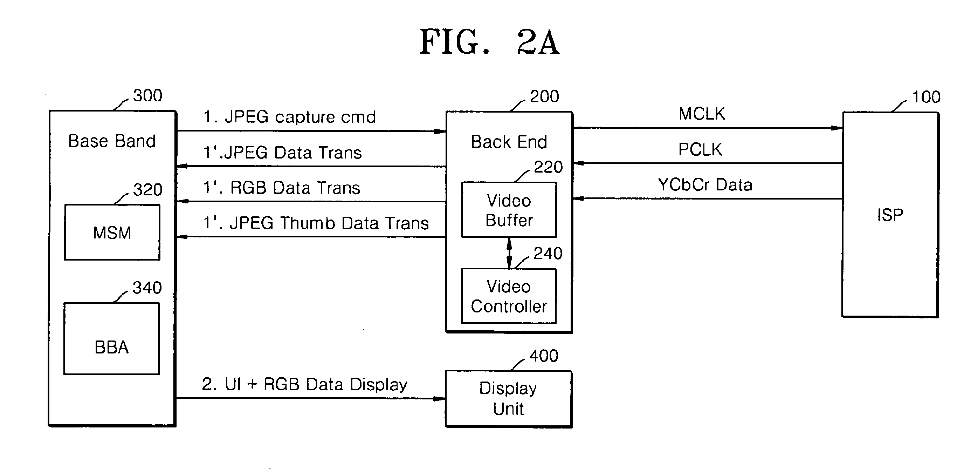

FIG. 2A is a data flow block diagram of an image processing apparatus that reduces a joint photographic coding experts group (JPEG) image capturing time according to an embodiment of the present invention. The image processing apparatus is an embedded system of a hand terminal that performs a multimedia function.

Referring to FIG. 2A, the image processing apparatus comprises a back end unit 200 including a video buffer 220 that stores luminance and chrominance signal YCbCr data received from a JPEG data camera, i.e., an image signal processor (ISP) 100, and a video buffer controller 240 that controls input/output of the YCbCr data stored in the video buffer 220, a base band unit 300 including a base band analog (BBA) unit 340 that modulates a signal, and a mobile station modem (MSM) 320 that performs a data processing function including image processing, and a display unit 400 that displays an image signal processed by the MSM 320. The display unit 400 may be a liquid crystal display (LCD). MCLK denotes a master clock signal. PCLK denotes a pixel clock signal.

The image processing apparatus of the present embodiment temporarily stores the YCbCr data received from the ISP 100 in the video buffer 220, and generates RGB data and JPEG thumbnail data that are to be displayed by using the YCbCr data, which reduces a time conventionally taken to generate JPEG data, decode the JPEG data, and generate RGB data.

In more detail, the video buffer 220 of the back end unit 200 stores an image detected by the ISP 100 via an image sensor as the YCbCr data that is scaled by a preview scaler. If the video buffer controller 240 of the band end unit 200 receives an instruction to generate JPEG data from the MSM 320, the JPEG data is generated as the conventional method. At the same time, the YCbCr data stored in the video buffer 220 is used to generate the RGB data (or YCC data) and the JPEG thumbnail data that are to be displayed. The JPEG data, the RGB data, and the JPEG thumbnail data are transferred to the MSM 320 or are read.

The MSM 320 transfers the JPEG data, the RGB data, and the JPEG thumbnail data to the display unit 400 and are stored in a memory unit (not shown) before or after the display unit 400 displays the RGB data and the JPEG thumbnail data.

Meanwhile, the MSM 320 transfers a signal for generating a user interface (UI) window to the display unit 400 when transferring the RGB data, and the JPEG thumbnail data, and the display unit 400 displays the RGB data as an image on a predetermined area thereof.

The image processing apparatus of the present embodiment stores the YCbCr data received from the ISP 100 in the video buffer 220, and generates the RGB data and the JPEG thumbnail data that are to be displayed by using the YCbCr data, which reduces the time conventionally taken to generate JPEG data, decoding the JPEG data, and generating RGB data and JPEG thumbnail data, thereby dramatically reducing the JPEG image capturing time.

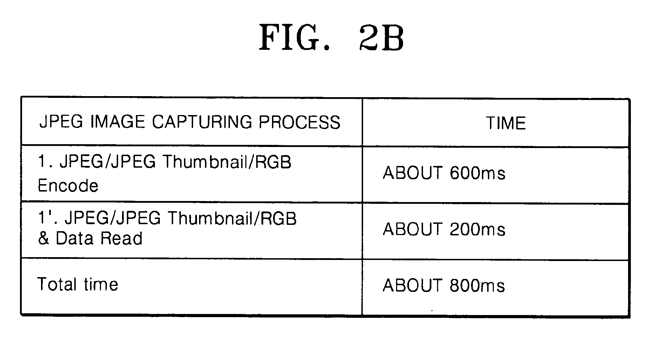

FIG. 2B is a table of the JPEG image capturing time required to perform a JPEG image capturing process in the image processing apparatus shown in FIG. 2A. JPEG image capturing process numbers included in the table correspond to numbers in arrows shown in FIG. 2A.

Referring to FIG. 2B, after the ISP 100 stores the YCbCr data is stored in the video buffer 220, if the MSM 320 sends an instruction to capture a JPEG image to the back end unit 200, the JPEG data, the JPEG thumbnail data, and the RGB data are generated. In more detail, the JPEG data is generated in response to the instruction to capture a JPEG image by encoding with a JPEG codec in a manner similar to the conventional method. The JPEG thumbnail data and the RGB data are generated using the YCbCr data stored in the video buffer 220.

The JPEG data, the JPEG thumbnail data and the RGB data are generated almost simultaneously with the instruction to capture a JPEG image. It takes about 600 ms to generate the JPEG data, the JPEG thumbnail data and the RGB data and about 200 ms to read them. Therefore, it takes about 800 ms to completely perform the JPEG image capturing process, which reduces the JPEG image capturing time by more than 45% compared to the conventional JPEG image capturing time of 1450 ms.

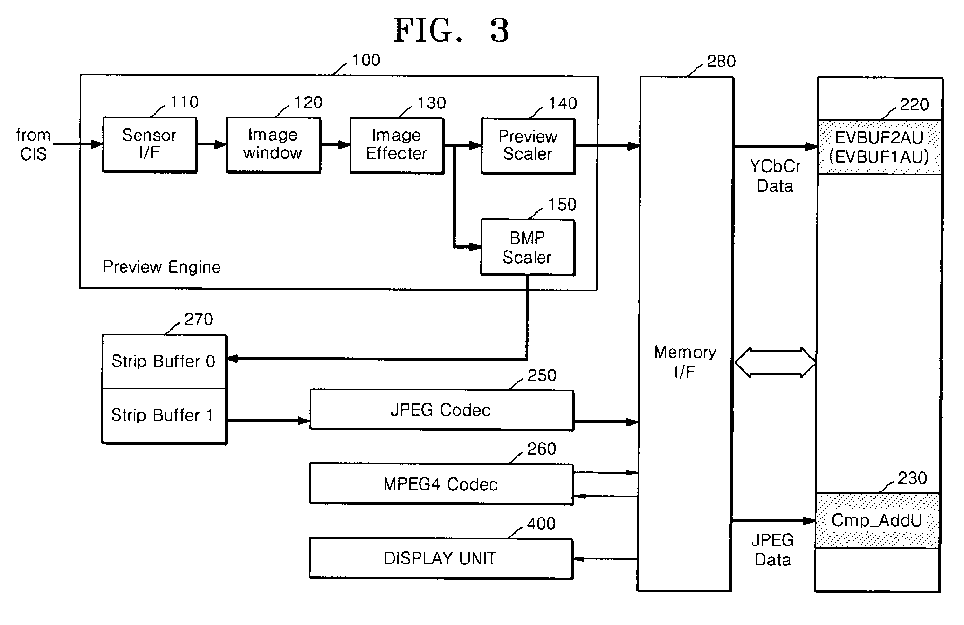

FIG. 3 is a detailed block diagram of the image processing apparatus that stores YCbCr data in a video buffer and generates JPEG data shown in FIG. 2A according to an embodiment of the present invention. Referring to FIG. 3, an image received from a complementary metal-oxide-semiconductor (CMOS) image sensor (CIS) is input into scalers 140 and 150 through a sensor interface 110, an image window 120, and an image effector 130. The ISP 100 is expressed as a processor without the CIS. The scalers 140 and 150 are a preview scaler 140 and a bit map (BMP) scaler 150. An image signal input into the preview scaler 140 is scaled and stored in the video buffer 220 as the YCbCr data through a memory interface 280. An image signal input into the BMP scaler 150 is scaled, is temporarily stored in a strip buffer 270, is encoded as the JPEG data through a JPEG codec 250, and is stored in a compress data buffer 230 through the memory interface 280.

The JPEG data is generated in response to an instruction to capture a JPEG image from the MSM 320. Meanwhile, an MPEG4 codec 260, which can be included in the image processing apparatus, generates MPEG4 data for a motion picture.

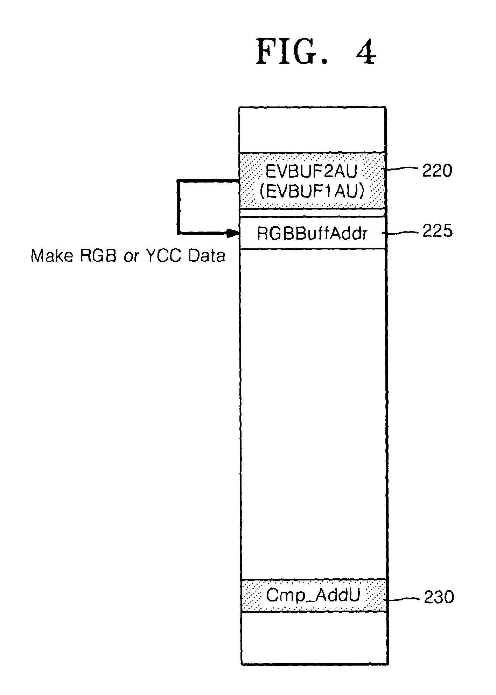

FIG. 4 is a data flow block diagram of a method of generating RGB data by using a video buffer in the image processing apparatus shown in FIG. 2A according to an embodiment of the present invention. Referring to FIG. 4, if an instruction to generate RGB or YCC data that are to be displayed is transferred, YCbCr data stored in the video buffer 220 is converted into the RGB or YCC data by using software of the back end unit 200, and is stored in an RGB data buffer 225. The instruction to generate the RGB data is transferred simultaneously with the transfer of an instruction to capture a JPEG image.

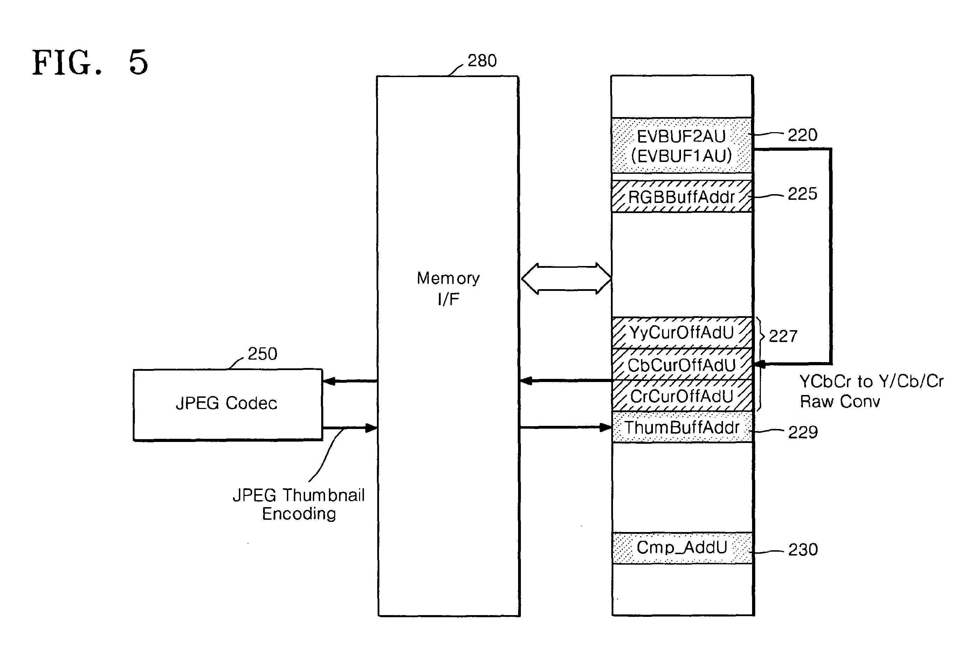

FIG. 5 is a data flow block diagram of a method of generating JPEG thumbnail data in the image processing apparatus shown in FIG. 2A according to an embodiment of the present invention. Referring to FIG. 5, if an instruction to generate the JPEG thumbnail data is transferred, YCbCr data stored in the video buffer 220 is divided into Y, Cb, and Cr signals, is stored in a Y/Cb/Cr buffer 227, is encoded and resized through the JPEG codec 250, and is stored in a thumbnail buffer 229 as the JPEG thumbnail data. The instruction to generate the JPEG thumbnail data is transferred simultaneously with an instruction to capture a JPEG image.

The JPEG data, RGB data, and JPEG thumbnail data stored in the buffers are transferred to the MSM 320 and are displayed on the display unit 400, or are stored in a memory unit and are displayed.

As described above, the image processing apparatus of the present embodiment stores the YCbCr data in the video buffer 220 before generating the JPEG data, and generates the RGB data or the JPEG thumbnail data using the YCbCr data, thereby dramatically reducing the JPEG image capturing time, and accordingly realizing a fast image display in a hand terminal such as a mobile phone.

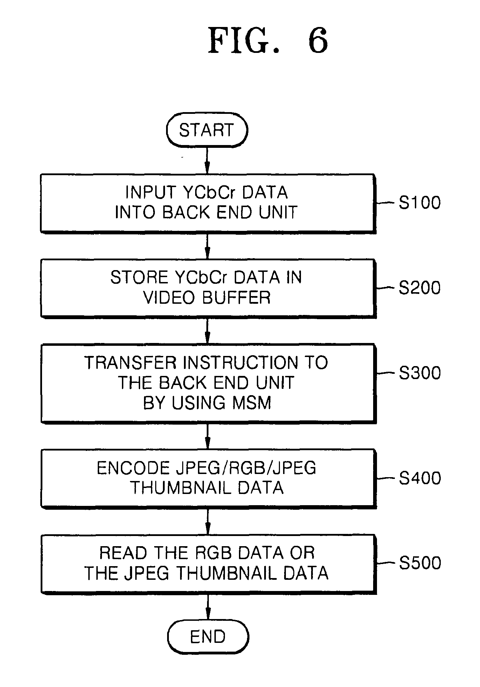

FIG. 6 is a flowchart illustrating a method of capturing a JPEG image in an image processing apparatus according to an embodiment of the present invention. The flowchart refers to the image processing apparatus shown in FIG. 2A for convenience of description.

Referring to FIG. 6, in operation S100, the ISP 100 inputs YCbCr data into the back end unit 200. In operation S200, the YCbCr data is stored in the video buffer 220 of the back end unit 200. The YCbCr data is scaled by a preview scaler. In operation S300, the MSM 320 of the base band unit 300 transfers an instruction to capture a JPEG image to the back end unit 200. The instruction to capture a JPEG image is transferred simultaneously with RGB data and JPEG thumbnail data.

In operation S400, the JPEG data, the RGB data, and the JPEG thumbnail data are generated in response to the instruction to capture the JPEG image. In more detail, the YCbCr data scaled by a BMP scaler is encoded as the JPEG data through a JPEG codec, and the RGB data is generated by converting the YCbCr data stored in the video buffer 220. The YCbCr data stored in the video buffer 220 is divided into Y, Cb, and Cr data, is encoded and resized through the JPEG codec, and is stored as the JPEG thumbnail data.

In operation S500, each of the JPEG data, the RGB data, and the JPEG thumbnail data is transferred and read to the MSM 320. Each of the JPEG data, the RGB data, and the JPEG thumbnail data is displayed on the display unit 400 or is stored in a memory so as to be displayed later.

An image processing apparatus capable of reducing a JPEG image capturing time, and a JPEG image capturing method used by the image processing apparatus of the present invention, store YCbCr data before generating JPEG data by using a video buffer, and generates RGB data or JPEG thumbnail data by using the YCbCr data, thereby dramatically reducing the JPEG image capturing time, and accordingly quickly displaying an image such as a photo in a hand terminal such as a mobile phone.

While the present invention has been particularly shown and described with reference to exemplary embodiments thereof, it will be understood by those of ordinary skill in the art that various changes in form and detail may be made therein without departing from the spirit and scope of the present invention as defined by the following claims.

## Claims

1. An image processing apparatus comprising:
a back end unit for
receiving an instruction from a base band unit to capture a joint photographic coding experts group (JPEG) image,
generating a first data using a video buffer and a video controller where the first data is used to generate an image, and
transferring the first data to the base band unit;
the base band unit for receiving the first data from the back end unit and transferring the first data to a display unit as a display information; and
the display unit for receiving the display information from the base band unit and displaying the display information.

2. The apparatus of claim 1, wherein the video buffer stores a second data where the second data is a YCbCr data received from an image signal processor (ISP).

3. The apparatus of claim 2, wherein
the second data is scaled by a preview scaler before being stored in the video buffer, and
the second data is simultaneously converted into a third data and stored in a compress data buffer of the back end unit where the second data is converted to the third data by scaling with a BMP scaler and encoding with a JPEG codec.

4. The apparatus of claim 2, wherein the second data stored in the video buffer is converted into an RGB data in response to an instruction to capture a JPEG image.

5. The apparatus of claim 2, wherein the second data stored in the video buffer is divided into Y, Cb, and Cr signals, and is encoded as a JPEG thumbnail data.

6. The apparatus of claim 1, wherein the first data comprises a JPEG data, a JPEG thumbnail data, or an RGB data,
wherein the display information comprises a RGB data or a JPEG thumbnail data.

7. A multimedia application processor (MAP) for communicating with an ISP and a base band unit, the MAP comprising:
a video buffer storing a YCbCr data received from the ISP; and
a video controller controlling an access of the video buffer,
wherein the video controller controls a transmission of an image generating data to a base band unit in response to an instruction received from the base band unit by accessing the video buffer.

8. The MAP of claim 7, wherein the image generating data comprises a JPEG data, a JPEG thumbnail data, or an RGB data,
wherein the RGB data is generated by converting the YCbCr data stored in the video buffer, and
wherein the JPEG thumbnail data is generated by dividing the YCbCr data stored in the video buffer into Y, Cb, and Cr data and encoding the Y, Cb, and Cr data using a JPEG codec.

9. The MAP of claim 7, wherein the YCbCr data received from the ISP is scaled by a preview scaler before being stored in the video buffer, and
the YCbCr data is simultaneously converted into a JPEG data and is stored in a compress data buffer of the MAP where the YCbCr data is converted to the JPEG data by scaling with a BMP scaler and encoding with a JPEG codec.

10. A JPEG image capturing method used by an image processing apparatus, the method comprising:
receiving a YCbCr data from an ISP;
storing the YCbCr data in a video buffer of a back end unit;
receiving an instruction to capture a JPEG image from a (mobile station modem) MSM;
generating a fourth data from the YCbCr data stored in the video buffer where the fourth data is used to generate an image; and
reading the fourth data to display the image on a display unit.

11. The method of claim 10, wherein the fourth data comprises a JPEG data, a JPEG thumbnail data, or an RGB data,
wherein the YCbCr data stored in the video buffer is a data received from the ISP that is scaled by a preview scaler, and
the JPEG data is a data received from the ISP that is scaled by a BMP scaler and encoded by a JPEG codec.

12. The method of claim 10, wherein the fourth data comprises a JPEG data, a JPEG thumbnail data, or an RGB data,
wherein the RGB data and the JPEG thumbnail data are generated using the YCbCr data stored in the video buffer.

13. The method of claim 12, wherein the RGB data is generated by converting the YCbCr data stored in the video buffer, and
wherein the JPEG thumbnail data is generated by dividing the YCbCr data into Y, Cb, and Cr data and encoding the Y, Cb, and Cr data using a JPEG codec.
